(19) Europäisches Patentamt
European Patent Office
Office européen des brevets

(11) EP 0 569 265 B1

(12) **FASCICULE DE BREVET EUROPEEN**

(45) Date de publication et mention de la délivrance du brevet:
**06.11.1996 Bulletin 1996/45**

(51) Int Cl.$^6$: **G21C 19/46**, C22B 60/04

(21) Numéro de dépôt: **93401025.7**

(22) Date de dépôt: **21.04.1993**

(54) **Procédé de dissolution du plutonium et/ou d'autres éléments radioactifs presents dans des produits solides ou liquides et dispositif de chauffage par micro-ondes pour mettre en oeuvre ce procédé**

Verfahren zum Auflösen von Plutonium und/oder andere radioaktiven Elemente in festen oder in flüssigen Produkte und Mikrowellenheizvorrichtung zur Anwendung dieses Verfahrens

Process for the dissolution of plutonium or other radioactive elements from solid or liquid products and microwave-powered heating device for carrying out the process

(84) Etats contractants désignés:
**BE DE GB**

(30) Priorité: **23.04.1992 FR 9205013**

(43) Date de publication de la demande:
**10.11.1993 Bulletin 1993/45**

(73) Titulaire: **COMPAGNIE GENERALE DES MATIERES NUCLEAIRES (COGEMA) F-78141 Vélizy-Villacoublay (FR)**

(72) Inventeurs:
• **Cauquil, Gérard F-30200 Codolet (FR)**
• **Sourrouille, Michel F-30290 Laudun (FR)**

(74) Mandataire: **Des Termes, Monique et al Société Brevatome 25, rue de Ponthieu 75008 Paris (FR)**

(56) Documents cités:
**FR-A- 2 496 324      GB-A- 2 182 482**

• **CHEMICAL ABSTRACTS, vol. 100, no. 8, Mars 1984, Columbus, Ohio, US; Abstract no. 58602x, 'Thermal denitration apparatus for metal nitrates', page 444; & JP-A-58 135 108**
• **CHEMICAL ABSTRACTS, vol. 95, no. 11, Novembre 1981, Columbus, Ohio, US; Abstract no. 194213, 'Apparatus for metal nitrate decomposition during reactor fuel processing', page 484; & JP-A-56 054 231**

## Description

La présente invention a pour objet un procédé de dissolution du plutonium et/ou d'éléments radioactifs présents dans des produits solides ou liquides, utilisable notamment pour dissoudre du plutonium ou de l'oxyde de plutonium dans une solution aqueuse et pour traiter des produits solides ou liquides contaminés par du plutonium.

Elle s'applique en particulier au traitement des déchets radioactifs organiques issus des installations nucléaires, ainsi qu'à la dissolution directe du plutonium et de l'oxyde de plutonium difficiles à dissoudre dans une solution aqueuse.

Parmi les procédés connus actuellement pour dissoudre dans une solution aqueuse le plutonium présent dans de l'oxyde de plutonium ou dans des déchets radioactifs, les documents EP-A-0 158 555, EP-A-0 160 589 et EP-A-0 297 738 décrivent des procédés basés sur l'utilisation d'ions $Ag^{2+}$ régénérables électrolytiquement pour catalyser la dissolution du plutonium dans une solution acide.

De tels procédés sont intéressants, mais ils nécessitent l'emploi d'une cellule électrochimique d'une structure particulière pour obtenir une régénération rapide des ions $Ag^{2+}$ nécessaires à la dissolution. De plus, la solution de dissolution est polluée par des ions $Ag^{2+}$.

Selon la présente invention, on a découvert que l'on pouvait obtenir d'aussi bons résultats pour le traitement de déchets radioactifs, sans utiliser d'ions $Ag^{2+}$, mais en réalisant un chauffage par micro-ondes pour minéraliser les déchets et obtenir la dissolution du plutonium.

Depuis quelques années, le chauffage par 5 micro-ondes a été utilisé dans différents domaines. Ainsi, des appareils de chauffage par micro-ondes ont été développés pour des procédés d'analyse comportant une étape de minéralisation par voie humide, comme il est décrit dans FR-A-2 560 529 et FR-A-2 560 686, mais jusqu'à présent personne n'a envisagé d'utiliser ce mode de chauffage pour traiter des déchets en vue de les décontaminer.

Des appareils de chauffage par micro-ondes ont aussi été utilisés pour la dénitration thermique de nitrates d'uranyle et/ou de plutonium. Ainsi, le document JP-A-58/135 108 décrit un dispositif de chauffage par micro-ondes comportant une enceinte à l'intérieur de laquelle on peut disposer des récipients contenant le nitrate à décomposer, des générateurs de micro-ondes extérieurs à l'enceinte et des moyens pour relier ces générateurs à des chambres de chauffage associées chacune à un récipient.

Le document JP-A-56/54231 décrit un dispositif de chauffage par micro-ondes qui comprend un four à micro-ondes alimenté en micro-ondes par un guide d'onde et muni d'un plateau rotatif sur lequel est amenée en continu la solution de nitrate à décomposer, et de moyens d'aspiration pour récupérer l'oxyde produit sur le plateau rotatif.

La présente invention a précisément pour objet l'utilisation d'une technique de minéralisation par micro-ondes pour traiter des produits contenant du plutonium et/ou d'autres éléments radioactifs en vue de dissoudre le plutonium et/ou ces éléments dans une solution aqueuse, ce qui permet dans le cas où les produits sont des déchets, de limiter le volume des déchets, tout en améliorant les possibilités de récupération du plutonium présent dans ces déchets.

Selon l'invention, le procédé de traitement de produits solides ou liquides contenant du plutonium et/ou d'autres éléments radioactifs, consiste :

a) à introduire les produits solides ou liquides dans une solution aqueuse acide, et
b) à chauffer par micro-ondes la solution aqueuse acide contenant ces produits, à une température et pendant une durée suffisantes pour détruire les produits solides et dissoudre le plutonium et/ou les éléments radioactifs dans la solution aqueuse.

Généralement, la solution aqueuse acide utilisée est une solution comprenant au moins un acide choisi dans le groupe comprenant l'acide nitrique, l'acide sulfurique, l'acide chlorhydrique, l'acide bromhydrique et l'acide fluorhydrique.

De préférence, on utilise une solution d'acide nitrique, car la solution nitrique obtenue en fin d'opération est compatible avec les solutions traitées actuellement dans les installations nucléaires, notamment les usines de retraitement de combustibles irradiés utilisant le procédé Purex.

De plus, le plutonium peut être récupéré de ces solutions par des techniques classiques.

Dans certains cas, on peut ajouter à la solution aqueuse acide un agent oxydant tel que $H_2O_2$, un persulfate ou un permanganate, par exemple $MnO_4K$, pour améliorer le rendement de la réaction de minéralisation.

Dans le procédé de l'invention, le choix de l'acide utilisé dépend en particulier de la nature des produits traités.

Selon l'invention, les produits solides ou liquides traités peuvent être soit des déchets organiques ou minéraux contaminés par du plutonium, soit du plutonium métallique, soit de l'oxyde de plutonium difficile à dissoudre, comme c'est le cas par exemple des fines de dissolution obtenues lors de la dissolution des combustibles irradiés.

Dans le procédé de l'invention, l'utilisation d'un chauffage par micro-ondes permet en particulier d'obtenir la dissolution du plutonium en utilisant des durées plus faibles et des réactifs moins agressifs que dans les procédés utilisés habituellement.

Par ailleurs, lorsque les produits traités sont des produits solides tels que des déchets organiques, par exemple des résines échangeuses d'ions, des gants, des pochettes, des cotons et des mouchoirs, on obtient facilement une destruction complète du déchet, ce qui ne pouvait être obtenu avec les procédés classiques.

Dans le cas où les produits solides sont des déchets organiques, on utilise de préférence comme solution aqueuse acide, une solution d'acide sulfurique ou d'acide nitrique. Les solutions d'acide nitrique conviennent en particulier dans le cas des déchets organiques à base de polymères tels que le caoutchouc ou des produits cellulosiques tels que coton, Kleenex®, etc. Les solutions d'acide sulfurique sont préférées dans le cas de déchets organiques constitués par des résines échangeuses d'ions et des polymères vinyliques.

Lorsque les produits traités sont des produits liquides, par exemple des solvants organiques contaminés comme du tributylphosphate dans du dodécane, on peut utiliser une solution aqueuse d'acide nitrique.

Lorsque le produit à traiter est du plutonium ou de l'oxyde de plutonium, on utilise de préférence une solution aqueuse d'acide nitrique et d'acide fluorhydrique qui catalyse la dissolution du plutonium. A titre d'exemple de solutions aqueuses appropriées, on peut citer les solutions contenant de 5 à 14 mol/l d'acide nitrique et de 0,01 à 0,1 mol/l d'acide fluorhydrique, comme la solution aqueuse à 7 mol/l de $HNO_3$ et à 0,05 mol/l de HF.

L'invention a également pour objet un dispositif permettant de réaliser le chauffage par micro-ondes de ces produits solides ou liquides, radio-actifs, dans une enceinte blindée ou une boîte à gants, tel que définis aux revendications 8 et 10.

Ce dispositif de chauffage par micro-ondes de produits radio-actifs comprend notamment :

- une enceinte étanche munie d'une paroi de protection biologique,
- un boîtier en matériau conducteur de l'électricité disposé dans l'enceinte et apte à recevoir un récipient contenant le produit à chauffer,
- un générateur de micro-ondes disposé à l'extérieur de l'enceinte,
- des moyens pour relier le générateur de micro-ondes au boîtier et alimenter en micro-ondes le boîtier en traversant l'enceinte et la paroi de protection biologique de l'enceinte par une ouverture de passage, et
- un moyen d'étanchéité $\alpha$ disposé au niveau de cette ouverture de passage.

Dans ce dispositif, l'enceinte étanche peut être constituée par une boîte à gants ou une enceinte blindée, et la mise en place de moyens pour alimenter l'enceinte en micro-ondes à partir d'un générateur placé à l'extérieur, permet d'adapter le chauffage par micro-ondes aux conditions de travail dans l'énergie nucléaire et de simplifier le fonctionnement du dispositif en facilitant l'accès d'un opérateur aux moyens de réglage et de commande du chauffage par micro-ondes.

Selon un premier mode de réalisation du dispositif de l'invention, les moyens pour relier le générateur de micro-ondes au boîtier et alimenter en micro-ondes le boîtier sont constitués par un guide d'onde, ce guide d'onde traversant la paroi de protection biologique de l'enceinte par l'ouverture de passage et présentant au moins une partie coudée entre cette ouverture de passage et le générateur de micro-ondes, et le dispositif comprend de plus une cale de protection biologique disposée derrière la partie coudée du guide d'onde au niveau de l'ouverture de passage pour assurer la continuité de la protection biologique au niveau de cette ouverture.

Le guide d'onde utilisé peut présenter une section carrée ou rectangulaire. De préférence, la section de ce guide d'onde est la plus faible possible, par exemple inférieure à 25 cm$^2$.

De préférence, le guide d'onde comporte deux parties coudées chacune à 45°, ce qui permet de positionner une protection biologique au niveau de l'ouverture de passage du guide d'onde dans l'enceinte, et de disposer le générateur de micro-ondes à 90° du guide d'onde, à une distance très proche de l'enceinte.

Avantageusement, le boîtier qui sert de cage de Faraday pour focaliser les micro-ondes, comporte des moyens de support du récipient contenant le produit à chauffer permettant le réglage en hauteur de la position du récipient par rapport à l'alimentation en micro-ondes du boîtier.

Selon un second mode de réalisation du dispositif de l'invention, le boîtier en matériau conducteur de l'électricité constitue un guide d'onde et les moyens pour relier le générateur de micro-ondes au boîtier et alimenter en micro-ondes le boîtier sont constitués par un câble coaxial traversant la paroi de protection biologique de l'enceinte par l'ouverture de passage.

Avantageusement, le câble coaxial est un câble semi-rigide de faible diamètre, par exemple de 6 mm de diamètre.

Le fait d'utiliser un câble coaxial semi-rigide de faible diamètre permet de former des coudes de faibles rayons de courbure, par exemple de 50 mm, et autorise la simplification importante des passages étanches d'enceinte et de paroi de protection biologique. En effet, l'ouverture de passage dans l'enceinte et dans la paroi de protection biologique est également de faible diamètre, par exemple de 10 mm.

Aussi, la présence d'une cale de protection biologique au niveau de l'ouverture de passage n'est pas indispensable comme dans le premier mode de réalisation du dispositif.

Toutefois, lorsque le câble coaxial présente au moins une partie coudée entre l'ouverture de passage et le générateur de micro-ondes, on peut disposer une cale de protection biologique au niveau de cette ouverture.

EP 0 569 265 B1

Dans ce second mode de réalisation du dispositif de l'invention, le boîtier constitué par le guide d'onde, est muni de préférence d'un absorbeur permettant d'éviter un retour de micro-ondes sur le générateur.

Cet absorbeur peut être constitué par un compartiment étanche du boîtier dans lequel on met en circulation un fluide de refroidissement tel que l'eau.

Dans ce second mode de réalisation du dispositif de l'invention, le boîtier qui sert de guide d'onde comporte une cavité de réception du récipient contenant le produit à chauffer. Il peut comporter également des moyens de support du récipient dans la cavité permettant un réglage en hauteur de la position du récipient par rapport à l'alimentation en micro-ondes.

Le câble coaxial a une longueur totale multiple de la longueur d'onde $\lambda$ des micro-ondes et le boîtier guide d'onde est dimensionné de telle manière que la distance comprise entre le centre de la cavité du boîtier devant accueillir le récipient et l'extrémité du câble coaxial arrivant dans le boîtier est un multiple de $\frac{\lambda}{2}$.

D'autres caractéristiques et avantages de l'invention apparaîtront mieux à la lecture de la description qui suit donnée bien entendu à titre illustratif et non limitatif en référence aux dessins annexés sur lesquels :

- la figure 1 représente en coupe verticale un dispositif de chauffage par micro-ondes conforme au premier mode de réalisation du dispositif de l'invention, utilisable pour mettre en oeuvre le procédé de l'invention ;
- la figure 2 représente en coupe horizontale le deuxième mode de réalisation du dispositif de chauffage par micro-ondes utilisable pour mettre en oeuvre le procédé de l'invention, et
- la figure 3 représente en coupe verticale le dispositif de la figure 2.

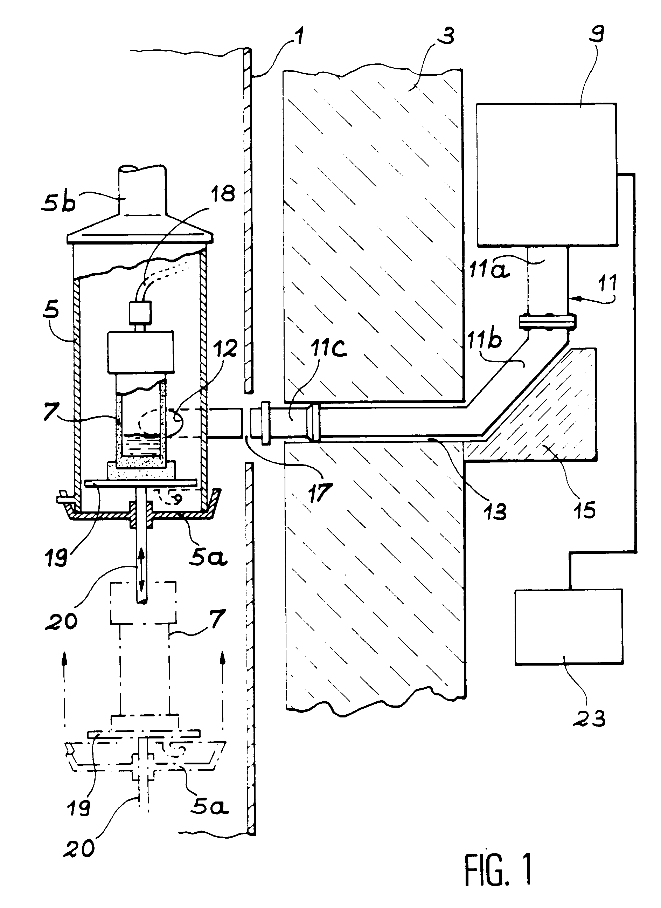

Sur la figure 1, on voit que le dispositif comprend une enceinte étanche 1 telle qu'une enceinte blindée ou une boîte à gants, munie d'une paroi de protection biologique 3, un boîtier 5 en matériau conducteur de l'électricité disposé dans l'enceinte 1 et un récipient 7 contenant le produit à chauffer disposé à l'intérieur du boîtier 5.

Un générateur de micro-ondes 9 est disposé à l'extérieur de l'enceinte et il sert à alimenter en micro-ondes le boîtier 5 par l'intermédiaire d'un guide d'onde 11 qui traverse la paroi de protection biologique 3 de l'enceinte par une ouverture 13 et arrive tangentiellement dans le boîtier 5 (en 12). On pourrait aussi disposer l'ouverture 13 d'alimentation en micro-ondes sur l'axe de façon à diriger les micro-ondes directement sur l'axe du boîtier 5. Ce guide d'onde, dans sa partie extérieure à l'enceinte 1, est formé de trois tronçons 11a, 11b et 11c, le tronçon 11b comportant deux segments coudés à 45°, afin de disposer derrière ce tronçon 11b au niveau de l'ouverture de passage 13 une cale de protection biologique 15 permettant d'assurer la continuité de la protection biologique au niveau de l'ouverture 13.

L'intérêt de réaliser le guide d'onde en trois tronçons est de permettre son utilisation dans des enceintes qui ne nécessiteraient pas une paroi de protection biologique 3. En effet, dans ces conditions, on pourra éliminer le tronçon 11b et monter directement le générateur de micro-ondes 9 par l'intermédiaire du tronçon 11a sur la partie 11c.

Dans le tronçon 11c, on dispose au niveau de l'enceinte 1 un moyen d'étanchéité alpha 17 connu de l'homme du métier, par exemple une membrane en polytétrafluoréthylène montée sur un joint torique.

Le boîtier 5 est muni d'un fond 5a amovible permettant d'introduire dans celui-ci le récipient 7 destiné à contenir le produit à chauffer et comporte un conduit 5b d'extraction des gaz.

Ce fond mobile 5a est associé à un support 19 muni d'une tige 20 qui peut coulisser dans le fond 5a en vue de régler la hauteur du support 19 par rapport au fond du boîtier 5a de façon à positionner le récipient 7 par rapport à l'alimentation en micro-ondes 12 du boîtier.

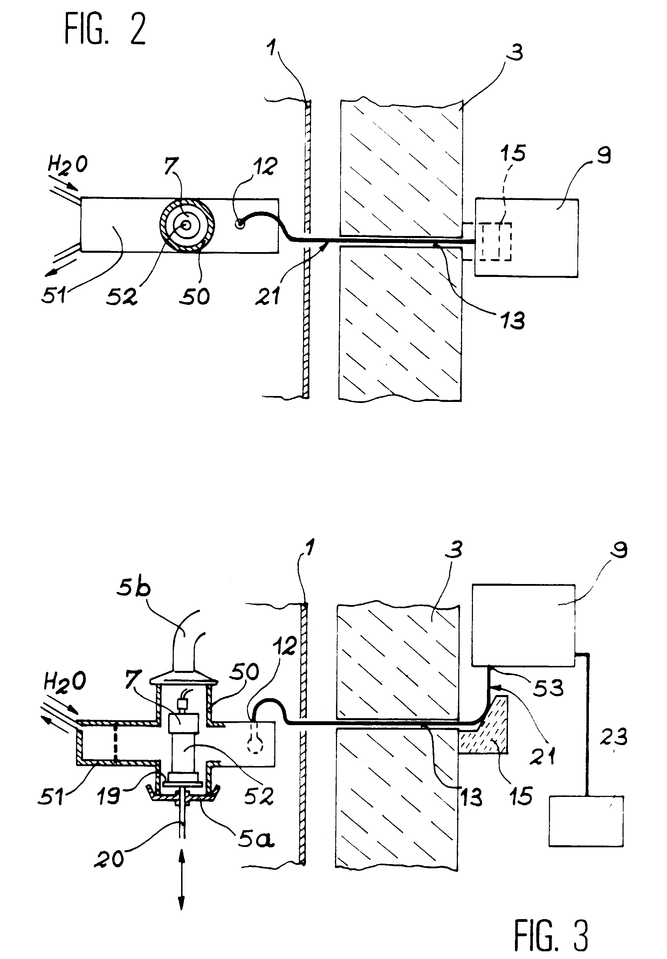

Sur la figure 2, on a représenté en coupe horizontale un dispositif de chauffage par micro-ondes conforme au second mode de réalisation du dispositif de l'invention.

La figure 3 représente une coupe verticale du dispositif de la figure 2.

Sur ces figures, on a repris les mêmes références pour désigner les constituants du dispositif déjà représentés sur la figure 1.

Ainsi, le dispositif des figures 2 et 3 comprend une enceinte étanche 1 telle qu'une enceinte blindée ou une boîte à gants, munie d'une paroi de protection biologique 3, un boîtier guide d'onde 5 en matériau conducteur de l'électricité disposé dans l'enceinte 1 et un récipient 7 contenant le produit à chauffer disposé dans une cavité 50 du boîtier 5.

Le générateur de micro-ondes 9 est disposé à l'extérieur de l'enceinte 1 et alimente le boîtier guide d'onde 5 par l'intermédiaire d'un câble coaxial 21 qui traverse la paroi de protection biologique 3 par une ouverture 13 et arrive dans le boîtier 5, en 12.

Le boîtier guide d'onde 5 comprend un compartiment étanche 51 dans lequel circule un fluide, par exemple de l'eau, pour l'absorption des pertes d'énergie.

La distance entre le centre 52 de la cavité 50 du boîtier guide d'onde et l'extrémité 12 du câble coaxial est proportionnelle à $\frac{\lambda}{2}$, $\lambda$ étant la longueur d'onde des micro-ondes ; la longueur du câble coaxial entre ses deux extrémités 12 et 53 est proportionnelle à $\lambda$.

Compte tenu de la faible section de l'ouverture de passage 13 dans la paroi de protection biologique 3, par exemple 10 mm, la cale 15 de protection biologique disposée à l'extérieur de l'enceinte et au niveau de l'ouverture de passage est facultative.

Sur la figure 3, on voit que la cavité de réception 50 du récipient 7 se prolonge de part et d'autre du guide d'onde 5 et qu'elle est munie d'un fond amovible 5a, d'une conduite 5b d'extraction des gaz et d'un support 19 du récipient 7 réglable en hauteur comme sur la figure 1.

Dans les deux modes de réalisation décrits ici, le récipient 7 peut être de différents types. Il peut être constitué en particulier par une bombe étanche munie éventuellement de moyens 18 d'évacuation de gaz. Le récipient est réalisé en matériau non conducteur de l'électricité, par exemple en matière plastique telle que le polytétrafluoréthylène ou en verre.

Le dispositif comprend de plus un boîtier de commande 23 permettant de régler les conditions (puissance, temps, etc.) de fonctionnement du générateur de micro-ondes 9.

Dans les dispositifs décrits ci-dessus, on utilise uniquement des matériaux résistant à la corrosion, par exemple de l'acier, de l'acier inoxydable ou du polytétrafluoréthylène, à l'intérieur de l'enceinte 1.

La paroi de protection biologique 3 peut être réalisée en plomb ou en acier et avoir une épaisseur inférieure à 25 cm. La cale 15 est de préférence en plomb.

Le générateur de micro-ondes 9 peut être un générateur classique de puissance modulable, ayant par exemple une puissance maximale de 300 à 800 watts et capable de fonctionner pendant plus de 2 heures.

Pour mettre en oeuvre le procédé de l'invention dans ce dispositif, on introduit dans le récipient 7 la quantité voulue de solution aqueuse acide et la quantité voulue de déchet solide ou de produit contenant du plutonium. De bons résultats peuvent être obtenus en utilisant des quantités telles que le rapport (en poids/volume) déchet/solution soit d'environ 1/80 (1 g de déchets pour 80 ml de solution acide). On place ensuite le récipient 7 dans le boîtier 5 à la hauteur voulue pour que le niveau de liquide soit bien positionné par rapport au guide d'onde. On met alors en marche le générateur de micro-ondes 9 en fournissant une puissance appropriée, pendant la durée voulue pour obtenir la dissolution complète et la destruction du déchet.

La puissance appliquée et la durée de traitement sont choisies en fonction de la nature du produit traité et du réactif utilisé.

Généralement, on diminue la puissance appliquée dès que l'on a obtenu l'ébullition de la solution pour maintenir cette ébullition avec une puissance plus faible.

En fin d'opération, on récupère ainsi une solution contenant du plutonium, qui peut être concentrée si nécessaire, puis traitée en vue de récupérer le plutonium.

Les exemples suivants illustrent la mise en oeuvre du procédé de l'invention.

**Exemple 1** : Dans cet exemple, on traite 1 g de caoutchouc provenant de gants en caoutchouc contaminés, par 80 ml d'acide nitrique 12N, pendant une durée de 16 min en utilisant au début 25 % de la puissance du générateur de micro-ondes à une fréquence de 2,45 GHz, soit 75 W et en maintenant ensuite l'ébullition avec une puissance de 15 % pendant 3 min, puis de 20 % pendant 11 min, soit des puissances de 45 et 60 W. L'énergie totale utilisée est donc de 15,7 W.h.

Après ces 16 min de traitement, on observe une destruction pratiquement complète du caoutchouc, et on obtient un rendement de 95 à 99 %.

On précise que le rendement est défini par le rapport $\frac{masse\ détruite}{masse\ initiale}$ x 100.

**Exemple 2** : Dans cet exemple, on traite 0,4 g de résine anionique du type Dowex 18 contaminée par du plutonium dans 32 ml d'acide sulfurique concentré en utilisant le même générateur que dans l'Exemple 1. Après 23 min d'exposition aux micro-ondes, soit une énergie de 23 W.h, on obtient un rendement de 98 %, c'est-à-dire une destruction complète de la résine et la libération totale du plutonium.

**Exemples 3 à 7** :

Dans ces exemples, on traite différents types de déchets en utilisant le même générateur de micro-ondes que dans l'Exemple 1. Les déchets traités, les réactifs utilisés, les conditions de traitement et les résultats obtenus figurent dans le tableau annexé. Dans ce tableau, on a également donné les résultats obtenus dans les Exemples 1 et 2.

Au vu de ce tableau, on remarque que le procédé de l'invention permet d'obtenir une minéralisation des gants en caoutchouc, des résines échangeuses d'ions, des cotons, Kleenex R et autres articles en cellulose, et d'éléments en polymère.

Il convient également pour le traitement de produits liquides tels que le tributylphosphate dans du dodécane. En effet, on obtient dans ce cas de très bons résultats en milieu nitrique malgré le problème d'immiscibilité du déchet organique et du réactif et les problèmes d'évaporation du solvant à forte température.

Ainsi, le procédé de l'invention est très intéressant pour ces différents déchets.

**Exemples comparatifs 8 et 9** :

Dans ces exemples, on suit le même mode opératoire que dans l'Exemple 2 pour traiter les déchets figurant dans le tableau en utilisant les réactifs et les conditions de traitement données dans ce tableau. Les résultats obtenus figurent également dans ce tableau.

Les résultats des exemples 8 et 9 montrent que le choix du milieu réactionnel est important, puisque dans le cas des résines anioniques, on ne peut obtenir la minéralisation avec de l'acide nitrique concentré alors qu'on obtient un rendement de 98 % avec l'acide sulfurique (Exemple 2). Il en est de même dans le cas du polymère (chlorure de polyvinyle) dans l'Exemple 9 malgré l'addition d'un agent oxydant constitué par du persulfate alors que celui-ci est attaqué partiellement par l'acide sulfurique dans l'Exemple 3.

**Exemple 10** :

Dans cet exemple, on utilise le procédé de l'invention pour dissoudre $PuO_2$ dans une solution aqueuse d'acide nitrique et d'acide fluorhydrique.

Dans ce but, on introduit 1 g de $PuO_2$ dans 20 ml d'une solution aqueuse à 14 mol/l de $HNO_3$ et à 0,05 mol/l de HF, puis on chauffe la solution à l'ébullition par des micro-ondes ayant une fréquence de 2,45 GHz et une puissance de 50 W pendant 30 min.

On obtient ainsi une dissolution complète de l'oxyde de plutonium.

**Exemple 11** :

On suit le même mode opératoire que dans l'exemple 10 pour dissoudre de l'oxyde de plutonium, mais on utilise une solution aqueuse à 7 mol/l d'acide nitrique et à 0,05 mol/l d'acide fluorhydrique. Dans ces conditions, on obtient la dissolution totale en 1 heure.

**Exemple comparatif 12 :**

Dans cet exemple, on suit le même mode opératoire que dans l'Exemple 10 pour dissoudre 1 g de $PuO_2$ dans 20 ml d'une solution à 14 mol/l de $HNO_3$ et 0,05 mol/l de HF, sauf que l'on utilise un chauffage par effet Joule au lieu du chauffage par micro-ondes.

Dans ces conditions, on obtient la dissolution complète du $PuO_2$ après environ 3 h.

En comparant les exemples 10 à 12, on remarque que, grâce au chauffage par micro-ondes, on peut réaliser la dissolution beaucoup plus rapidement et utiliser une solution ayant une acidité nitrique plus faible, donc moins corrosive.

**Exemple 13 :**

Dans cet exemple, on dissout 0,2 g de plutonium dans une solution aqueuse à 7 moles/l d'acide nitrique et 0,05 mol/l d'acide fluorhydrique en réalisant le chauffage par micro-ondes pendant 15 min, avec une puissance de 50 W.h et une fréquence de 2,45 GHz. On obtient ainsi la dissolution complète du plutonium métal.

**Exemple comparatif 14 :**

Dans cet exemple, on suit le mode opératoire classique pour dissoudre 0,2 g de plutonium en utilisant 10 ml d'une solution d'acide bromhydrique à 3 mol/l, en éliminant ensuite le brome par distillation et en reprenant le résidu par une solution aqueuse d'acide nitrique à 7 moles/l et d'acide fluorhydrique à 0,05 mole/l. Dans ces conditions, la durée totale du traitement est de 2 heures, alors qu'elle n'est que de 15 min dans l'exemple précédent.

Ainsi, l'utilisation selon l'invention d'un chauffage par micro-ondes permet d'améliorer les procédés de traitement de déchets radioactifs ainsi que les procédés de dissolution du plutonium à partir d'oxyde de plutonium ou de plutonium métallique.

T A B L E A U

| EX | DECHET | PROVENANCE | QUANTITE INTRODUITE | MILIEU REACTIONNEL | Rdt en % | DUREE en min | ENERGIE FOURNIE |
|---|---|---|---|---|---|---|---|
| 1 | CAOUTCHOUC | PREGANTS | 1 g | 80 ml de $HNO_3$, 12 N | 95-99 | 16' | 16 W.H |
| 2 | RESINE ANIONIQUE | DOWEX 1*8 | 0,4 g | 32 ml de $H_2SO_4$,CONC | 98 % | 23' | 23 W.H |
| 3 | POLYMERE | CRUCHONS 18 ML | 1 g | 80 ml de $H_2SO_4$, CONC | 30-40 | 28' | 24 W.H |
| 4 | CELLULOSE | KLEENEX | 1 g | 80 ml de $HNO_3$, 12N | 100 % | 10' | 10 W.H |
| 5 | COTON | DECONTAMINATION | 0,6 g | 48 ml de $HNO_3$, 12N | 100 % | 18' | 16 W.H |
| 6 | SOLVANT | TBP/DODECANE | 1 ml | 80 ml de $HNO_3$, 12N | 60-90 | 42' | 36 W.H |
| 7 | CAOUTCHOUC | GANTS VENITEX | 1 g | 80 ml de $HNO_3$, 12N | 95-99 | 30' | 28 W.H |
| 8 | RESINE ANIONIQUE | DOWEX 1*8 | 0,2 g | 16 ml de $HNO_3$, 12N | 0 | 22' | 17 W.H |
| 9 | POLYMERE | CRUCHONS 18 ML | 0,5 g | 40 ml de $HNO_3$, $S_2O_8^-$ | 0 | 30' | 32 W.H |

**Revendications**

1. Procédé de traitement de produits solides ou liquides contenant du plutonium et/ou d'autres éléments radioactifs, caractérisé en ce qu'il consiste :

a) à introduire les produits solides ou liquides dans une solution aqueuse acide, et
b) à chauffer par micro-ondes la solution aqueuse acide contenant ces produits, à une température et pendant une durée suffisantes pour détruire les produits solides et dissoudre le plutonium et/ou les éléments radioactifs dans la solution aqueuse.

2. Procédé selon la revendication 1, caractérisé en ce que la solution aqueuse acide est une solution comprenant au moins un acide choisi dans le groupe comprenant l'acide nitrique, l'acide sulfurique, l'acide chlorhydrique, l'acide bromhydrique et l'acide fluorhydrique.

3. Procédé selon l'une quelconque des revendications 1 et 2, caractérisé en ce que les produits solides sont du plutonium ou de l'oxyde de plutonium.

4. Procédé selon la revendication 3, caractérisé en ce que la solution aqueuse est une solution contenant de 5 à 14 mol/l de $HNO_3$ et de 0,01 à 0,1 mol/l de HF.

5. Procédé selon l'une quelconque des revendications 1 et 2, caractérisé en ce que les produits solides sont des déchets organiques contaminés par du plutonium ou d'autres éléments radioactifs.

6. Procédé selon la revendication 5, caractérisé en ce que la solution aqueuse est une solution d'acide nitrique ou d'acide sulfurique.

7. Procédé selon l'une quelconque des revendications 1 et 2, caractérisé en ce que les produits liquides sont des solvants organiques contaminés.

8. Dispositif de chauffage par micro-ondes de produits radioactifs comprenant une enceinte étanche (1), un récipient (7) disposé dans l'enceinte pour contenir le produit à chauffer, un générateur de micro-ondes (9) disposé à l'extérieur de l'enceinte et des moyens pour alimenter l'enceinte en micro-ondes à partir de ce générateur, caractérisé en ce que l'enceinte étanche est munie d'une paroi de protection biologique (3), les moyens pour alimenter l'enceinte en micro-ondes comprennent un boîtier (5) en matériau conducteur de l'électricité disposé dans l'enceinte et apte à recevoir le récipient (7) contenant le produit à chauffer, ce boîtier étant relié au générateur de micro-ondes (9) disposé à l'extérieur de l'enceinte par un guide d'onde (11) traversant la paroi de protection biologique de l'enceinte par une ouverture de passage (13) et présentant au moins une partie coudée entre cette ouverture de passage et le générateur de micro-ondes, et le dispositif comprend de plus un moyen d'étanchéité α disposé au niveau de cette ouverture de passage et une cale de protection biologique (15) disposée derrière la partie coudée du guide d'onde au niveau de l'ouverture de passage (13) pour assurer la continuité de la protection biologique au niveau de cette ouverture.

9. Dispositif selon la revendication 8, caractérisé en ce que le guide d'onde comporte deux parties coudées chacune à 45°.

10. Dispositif de chauffage par micro-ondes de produits radioactifs comprenant une enceinte étanche (1), un récipient (7) disposé dans l'enceinte pour contenir le produit à chauffer, un générateur de micro-ondes (9) disposé à l'extérieur de l'enceinte et des moyens pour alimenter l'enceinte en micro-ondes à partir de ce générateur, caractérisé en ce que l'enceinte étanche est munie d'une paroi de protection biologique (3), les moyens pour alimenter l'enceinte en micro-ondes comprennent un boîtier (5) en matériau conducteur de l'électricité disposé dans l'enceinte et apte à recevoir le récipient (7) contenant le produit à chauffer, ce boîtier constituant un guide d'onde et étant relié au générateur de micro-ondes (9) disposé à l'extérieur de l'enceinte, par un câble coaxial (21) traversant la paroi de protection biologique (3) de l'enceinte par une ouverture de passage (13) et le dispositif comprend de plus un moyen d'étanchéité α disposé au niveau de cette ouverture de passage.

11. Dispositif selon la revendication 10, caractérisé en ce que le boîtier constitué par le guide d'onde est muni d'un absorbeur permettant d'éviter un retour de micro-ondes sur le générateur.

12. Dispositif selon la revendication 11, caractérisé en ce que l'absorbeur est constitué par un compartiment étanche du boîtier dans lequel on met en circulation un fluide de refroidissement.

13. Dispositif selon l'une quelconque des revendications 10 à 12, caractérisé en ce que le câble coaxial présente au moins une partie coudée entre l'ouverture de passage (13) et le générateur de micro-ondes, et en ce que le dispositif comprend de plus une cale de protection biologique au niveau de cette ouverture.

14. Dispositif selon l'une quelconque des revendications 8 à 13, caractérisé en ce que le boîtier comporte des moyens de support (19, 20) du récipient contenant le produit à chauffer permettant un réglage en hauteur de la position du récipient par rapport à l'alimentation (12) en micro-ondes du boîtier.

**Patentansprüche**

1. Verfahren zur Behandlung von festen oder flüssigen Produkten, die Plutonium und/oder andere radioaktive Elemente enthalten,
**dadurch gekennzeichnet, daß** es darin besteht,

   a) die festen oder flüssigen Produkte in eine saure wässerige Lösung zu geben, und
   b) die saure wässerige Lösung, die diese Produkte enthält, mit Mikrowelle während einer ausreichend langen Zeitspanne auf eine ausreichende Temperatur zu erwärmen, um die festen Produkte zu zerstören und das Plutonium und/oder die radioaktiven Elemente in der wässerigen Lösung zu lösen.

2. Verfahren nach Anspruch 1,
**dadurch gekennzeichnet, daß** die saure wässerige Lösung eine Lösung ist, die mindestens eine der Säuren Salpetersäure, Schwefelsäure, Hydrochlorsäure, Bromwasserstoffsäure und Fluorwasserstoffsäure enthält.

3. Verfahren nach einem der Ansprüche 1 und 2,
**dadurch gekennzeichnet, daß** die festen Produkte Plutonium oder Plutoniumoxid sind.

4. Verfahren nach Anspruch 3,
**dadurch gekennzeichnet, daß** die wässerige Lösung eine Lösung ist, die 5 bis 14 Mol/l $HNO_3$ und 0,01 bis 0,1 Mol/l HF enthält.

5. Verfahren nach einem der Ansprüche 1 und 2,
**dadurch gekennzeichnet, daß** die festen Produkte plutoniumverseuchte organische Abfälle oder andere radioaktive Elemente sind.

6. Verfahren nach Anspruch 5,
**dadurch gekennzeichnet, daß** die wässerige Lösung eine Salpetersäure- oder Schwefelsäurelösung ist.

7. Verfahren nach einem der Ansprüche 1 und 2,
**dadurch gekennzeichnet, daß** die flüssigen Produkte verseuchte organische Lösungsmittel sind.

8. Vorrichtung zum Mikrowellenerwärmen von radioaktiven Produkten, bestehend aus einem dichten Raum (1), einem Behälter (7), der in dem Raum angeordnet ist, um das zu erwärmende Produkt zu enthalten, einem Mikrowellengenerator (9), der außerhalb des Raums angeordnet ist, und aus Mitteln, die den Raum von diesem Generator aus mit Mikrowellen speisen,
**dadurch gekennzeichnet, daß** der dichte Raum mit einer biologischen Schutzwand (3) versehen ist, die Mittel, die den Raum mit Mikrowellen speisen, aus einem Gehäuse (5) aus elektrisch leitendem Material bestehen, das in dem Raum angeordnet ist und geeignet ist, den Behälter (7), der das zu erwärmende Produkt enthält, aufzunehmen, wobei dieses Gehäuse mit dem außerhalb des Raums angeordneten Mikrowellengenerator (9) durch einen Wellenleiter (11) verbunden ist, der mittels einer Durchlaßöffnung (13) durch die biologische Schutzwand des Raums verläuft, und zwischen dieser Durchlaßöffnung und dem Mikrowellengenerator mindestens einen gebogenen Teil aufweist, und die Vorrichtung zudem ein Dichtungsmittel aufweist, das im Bereich dieser Durchlaßöffnung angeordnet ist, und einen biologischen Schutzblock (15) aufweist, der hinter dem gebogenen Teil des Wellenleiters im Bereich der Durchlaßöffnung (13) angeordnet ist, um die Kontinuität des biologischen Schutzes im Bereich dieser Öffnung zu gewährleisten.

9. Vorrichtung nach Anspruch 8,
**dadurch gekennzeichnet, daß** der Wellenleiter zwei jeweils im Winkel von 45° gebogene Teile aufweist.

10. Vorrichtung zum Mikrowellenerwärmen von radioaktiven Produkten, bestehend aus einem dichten Raum (1), einem Behälter (7), der in dem Raum angeordnet ist, um das zu erwärmende Produkt zu enthalten, einem Mikrowellengenerator (9), der außerhalb des Raums angeordnet ist, und aus Mitteln, die den Raum von diesem Generator aus mit Mikrowellen speisen,

**dadurch gekennzeichnet, daß** der dichte Raum mit einer biologischen Schutzwand (3) versehen ist, die Mittel, die den Raum mit Mikrowellen speisen, aus einem Gehäuse (5) aus elektrisch leitendem Material bestehen, das in dem Raum angeordnet ist und geeignet ist, den Behälter (7), der das zu erwärmende Produkt enthält, aufzunehmen, wobei dieses Gehäuse einen Wellenleiter bildet und mit dem außerhalb des Raums angeordneten Mikrowellengenerator (9) durch ein koaxiales Kabel (21) verbunden ist, das mittels einer Durchlaßöffnung (13) durch die biologische Schutzwand (3) des Raums verläuft, und wobei die Vorrichtung zudem ein Dichtungsmittel aufweist, das im Bereich dieser Durchlaßöffnung angeordnet ist.

11. Vorrichtung nach Anspruch 10,
**dadurch gekennzeichnet, daß** das Gehäuse, das von dem Wellenleiter gebildet wird, mit einem Absorber versehen ist, durch den eine Rückkehr von Mikrowellen zum Generator vermieden werden kann.

12. Vorrichtung nach Anspruch 11,
**dadurch gekennzeichnet, daß** der Absorber aus einem dichten Abteil des Gehäuses besteht, in dem man ein Kühlfluid zirkulieren läßt.

13. Vorrichtung nach einem der Ansprüche 10 bis 12,
**dadurch gekennzeichnet, daß** das koaxiale Kabel zwischen der Durchlaßöffnung (13) und dem Mikrowellengenerator mindestens einen gebogenen Teil aufweist, und daß die Vorrichtung im Bereich dieser Öffnung zudem einen biologischen Schutzblock aufweist.

14. Vorrichtung nach einem der Ansprüche 8 bis 13,
**dadurch gekennzeichnet, daß** das Gehäuse Auflagemittel (19, 20) für den Behälter mit dem zu erwärmenden Produkt aufweist, mit denen die Position des Behälters zu der Mikrowellenversorgung (12) des Gehäuses in der Höhe verstellt werden kann.

## Claims

1. Process for the treatment of solid or liquid products containing plutonium and/or other radioactive elements, characterized in that it comprises:

    a) introducing the solid or liquid products into an aqueous, acid solution and
    b) microwave heating the aqueous, acid solution containing these products at a temperature and for a time adequate for destroying the solid products and for dissolving the plutonium and/or radioactive elements in the aqueous solution.

2. Process according to claim 1, characterized in that the acid, aqueous solution is a solution incorporating at least one acid chosen from among nitric, sulphuric, hydrochloric, hydrobromic and hydrofluoric acid.

3. Process according to either of the claims 1 and 2, characterized in that the solid products are plutonium or plutonium dioxide.

4. Process according to claim 3, characterized in that the aqueous solution is a solution containing 5 to 14 mole/l $HNO_3$ and 0.01 to 0.1 mole/l of HF.

5. Process according to either of the claims 1 and 2, characterized in that the solid products are organic waste materials contaminated by plutonium or other radioactive elements.

6. Process according to claim 5, characterized in that the aqueous solution is a nitric or sulphuric acid solution.

7. Process according to either of the claims 1 and 2, characterized in that the liquid products are contaminated organic solvents.

8. Apparatus for the microwave heating of radioactive products comprising a tight enclosure (1), a container (7) placed in the enclosure for containing the product to be heated, a microwave generator (9) located outside the enclosure and means for supplying the enclosure with microwaves from said generator, characterized in that the tight enclosure is provided with a biological protection wall (3), the means for supplying the enclosure with microwaves incorporating an electricity conducting material chamber (5) located in the enclosure and able to receive the container (7) containing the product to be heated, said chamber being connected to the microwave generator (9) located outside the enclosure by a waveguide (11) traversing the biological protection wall of the enclosure via a passage opening (13) and having at least one bent portion between said passage opening and the microwave generator, the apparatus also comprising an $\alpha$ sealing means positioned level with said passage opening and a biological protection wedge (15) behind the bent portion of the waveguide at the passage opening (13) in order to ensure the continuity of the biological protection at said opening.

9. Apparatus according to claim 8, characterized in that the waveguide has two portions, each bent by 45°.

10. Apparatus for the microwave heating of radioactive products comprising a tight enclosure (1), a container (7) placed in the container for containing the product to be heated, a microwave generator (9) located outside the enclosure and means for supplying the enclosure with microwaves from the generator, characterized in that the tight enclosure is provided with a biological protection wall (3), the means for supplying the enclosure with microwaves comprising an electricity conducting material chamber (5) placed in the enclosure and able to receive the container (7) containing the product to be heated, the chamber constituting a waveguide and is connected to the microwave generator (9) located outside the enclosure by a coaxial cable (21) traversing the biological protection wall (3) of the enclosure through a passage opening (13) and the apparatus also comprises an $\alpha$ sealing means located at said passage opening.

11. Apparatus according to claim 10, characterized in that the chamber constituted by the waveguide is provided with an absorber preventing a microwave return to the generator.

12. Apparatus according to claim 11, characterized in that the absorber is constituted by a tight compartment of the chamber in which is circulated a cooling fluid.

13. Apparatus according to any one of the claims 10 to 12, characterized in that the coaxial cable has at least one bent portion between the passage opening (13) and the microwave generator and in that the apparatus also comprises a biological protection wedge at said opening.

14. Apparatus according to any one of the claims 8 to 13, characterized in that the chamber has means (19, 20) for supporting the container containing the product to be heated permitting a height regulation of the position of the container with respect to the microwave supply (12) for the chamber.

FIG. 1

FIG. 2

FIG. 3